# EUROPÄISCHE PATENTSCHRIFT

(11) **EP 2 654 524 B1**
(45) Veröffentlichungstag und Bekanntmachung des Hinweises auf die Patenterteilung: **06.04.2016**
(21) Anmeldenummer: 11794782.0
(22) Anmeldetag: 15.12.2011
(51) Int. Cl.: A47J 31/36

(54) **KAFFEEVOLLAUTOMAT MIT SPINDELANTRIEB**
AUTOMATIC COFFEE MACHINE WITH SPINDLE DRIVE
MACHINE À CAFÉ MUNIE D'UN ENTRAINEMENT AVEC VIS SANS FIN

(30) Priorität: 22.12.2010 DE 102010063958
(43) Veröffentlichungstag der Anmeldung: 30.10.2013
(73) Patentinhaber: BSH Hausgeräte GmbH, 81739 München (DE)
(72) Erfinder: HOECK, Florian, 83334 Inzell (DE); KNAUER, Joachim, 80807 München (DE); STROBL, Robert, 83246 Unterwössen (DE)
(86) Internationale Anmeldenummer: PCT/EP2011/072841
(87) Internationale Veröffentlichungsnummer: WO 2012/084667

(56) Entgegenhaltungen:
- EP-A1- 0 659 377
- EP-A1- 1 532 903
- EP-A1- 1 774 881
- EP-A2- 0 299 399

## Beschreibung

Die Erfindung betrifft einen Kaffeevollautomaten, insbesondere für Haushaltszwecke, zur Zubereitung einer Mehrzahl unterschiedlicher Kaffeegetränke, mit einer verlagerbaren Brühkammer, die eine Öffnung zum Befüllen mit gemahlenem Kaffee bzw. Kaffeepulver aufweist, mit einem feststehenden Brühkopf zum Verpressen des Kaffeepulvers in der Brühkammer, und mit einem verlagerbaren T-Kolben in der Brühkammer zum Auswerfen von gemahlenem und ausgelaugten Kaffee.

Aus der EP 2036466 A1 ist ein Kaffeevollautomat zum Einsatz im Haushalt bekannt, mit dem eine Mehrzahl unterschiedlicher Kaffeegetränke zubereitet werden kann. Er weist eine Brühkammer auf, die entlang einer Achse verlagert werden kann. Ferner weist die verlagerbare Brühkammer eine obere Öffnung zum Befüllen mit gemahlenem Kaffee sowie eine untere Öffnung auf. Sowohl die obere als auch die untere Öffnung der Brühkammer können mit einem Boden- bzw. Deckelelement verschlossen werden. Zum Verpressen des eingefüllten Kaffees können die Brühkammer und das Bodenelement entlang der Achse verfahren werden. Zugleich ist eine Relativbewegung des Bodenelements in Bezug zur Brühkammer möglich, wobei diese Relativbewegung durch untere und obere Anschläge der Brühkammer begrenzt wird, an die bei Erreichen der Endposition Kontaktflächen des Bodenelements anstoßen. Die Brühkammer ist also mit dem Bodenelement derart bewegungsgekoppelt, dass die Brühkammer durch das Bodenelements zum Verpressen von gemahlenem Kaffee angehoben und nach Abschluss des Brühvorgangs wieder abgesenkt werden kann, um den Kaffeetrester aus der Brühkammer zu entfernen. Diese Form der Bewegungskopplung des Bodenelements mit der Brühkammer bedingt eine relativ große Höhe der Brüheinheit und damit des Kaffeevollautomaten von über 310 mm.

Die Brüheinrichtung der EP 0 299 399 A2 weist als einzigen angetriebenen Teil die Einrichtung einen axial verschiebbaren Brühzylinder auf, in welchem ein Kolben axial frei beweglich angeordnet ist. Dieser Kolben wird durch eine Führungsbüchse positioniert bzw. mit dem Brühzylinder mitbewegt. Im Weiteren weist ein Halteblock einen Anschlag für den Teller des Kolbens auf. Ein zweiter Kolben ist feststehend angeordnet oder er \ kann gegen die Kraft einer Feder ebenfalls axial gegen einen anderen Halteblock bewegt werden. Durch die Bewegung des Brühzylinders wird zwischen den Kolben eingebrachtes Kaffeepulver verdichtet und durch Zuführen von heissem Wasser Kaffee gebrüht.

Die EP 1 532 903 A1 betrifft eine Extraktionsvorrichtung zur Erzeugung von Kaffee für eine Kaffeemaschine, mit einem Brühzylinder zur Aufnahme von Kaffeepulver, der in seiner Achsrichtung in Zusammenwirkung mit einer Antriebsvorrichtung zwischen vorbestimmten Stellungen hin und her verstellbar ist, und mit zwei zum Brühzylinder koaxialen, relativ zueinander verstellbaren Kolben von denen der erste Kolben beim Einfüllen des Kaffeepulvers über eine seitliche Einfüllöffnung ein offenes Ende des Brühzylinders geschlossen hält, wobei der Brühzylinder in eine Ausstossposition verstellbar ist, bei der das verbrauchte Kaffeepulver unter Freigabe des Brühzylinder-Endes durch den ersten Kolben ausgestossen wird, dadurch gekennzeichnet, dass der Brühzylinder in zwei Zylinderteile aufgeteilt ist, von denen der eine den durch die Antriebsvorrichtung verstellbaren Brühzylinderteil bildet und der andere Zylinderteil an dem durch den ersten Kolben verschliessbaren Ende des Brühzylinders angeordnet und mit der Einfüllöffnung zum Einfüllen des Kaffeepulvers versehen ist, wobei Mittel vorgesehen sind, durch welche die beiden Zylinderteile in der Einfüllposition stirnseitig aneinandergedrückt sind, indessen sie in der voneinander getrennt sind zur Bildung eines Axialspaltes zur Entfernung des verbrauchten Kaffeepulvers.

Die EP 1 774 881 A1 betrifft eine Kaffeemaschine mit einem Brühkopf, mit einem oberen Verschlusselement und einem unteren Verschlusselement, wobei der Brühkopf eine zylinderförmige Brühkammer mit vertikaler Zylinderachse aufweist, die durch das obere Verschlusselement und das untere Verschlusselement verschliessbar ist und wobei der Brühkopf an zumindest zwei vertikalen Führungselementen festgelegt und über diese höhenverstellbar in der Kaffeemaschine angeordnet ist.

Die EP 0 659 377 A1 betrifft eine automatische Maschine zum Bereiten von Espressokaffee oder ähnlichen Getränken, wobei das Getränk dadurch erreicht wird, daß gemahlener Kaffee oder ein anderes gemahlenes Produkt in eine Brühkammer eingegeben wird, wobei dieses gemahlene Produkt bzw. Pulver zusammengepreßt und dann unter Druck stehender Dampf bzw. heißes Wasser durch dasselbe durchgeleitet wird

Aufgabe der Erfindung ist es, einen Kaffeevollautomaten anzugeben, der eine geringere Abmessung in der Höhe aufweist.
Diese Aufgabe wird bei dem eingangs genannten Kaffeevollautomaten erfindungsgemäß durch eine Kupplung zum lösbaren Ankoppeln der Brühkammer an den T-Kolben zum Verlagern der an den T-Kolben angekuppelten Brühkammer gelöst. Die Kupplung zum gekuppelten Verlagern der Brühkammer und dem T-Kolben bewirkt, dass im Unterschied zum Stand der Technik der T-Kolben beim Verpressen des Kaffeepulvers nicht zwingend auf einer dem Brühkopf gegenüberliegenden Bodenfläche der Brühkammer ruht. Er kann vielmehr nicht nur zum Auswerfen, sondern auch beim Verpressen angetrieben und auf den Brühkopf zugefahren werden. Da er dem Brühkopf beim Verpressen entgegen kommt, braucht der feststehende Brühkopf seinerseits nicht tief in die Brühkammer einzutauchen. Er kann daher kürzer ausgebildet werden, so dass auch die Brüheinheit insgesamt eine geringere Bauhöhe erhalten kann. Dies erhöht die Qualität des Kaffeegetränks, da Leitungen, die das Kaffeegetränk zu einem Gefäß wie eine Tasse führen, kürzer ausgebildet sein können und somit ein schnellerer Transport des Kaffeegetränks stattfindet. Der T-Kolben ist daher mit einem Antrieb direkt verbunden, während die Brühkammer selbst antriebslos und nur indirekt über den T-Kolben mit dem Antrieb verbunden ist. Um sie dennoch zu verfahren, kann sie erfindungsgemäß während eines Zubereitungsvorgangs nach Bedarf zeitweise an den T-Kolben gekuppelt werden. Die lösbare Kuppelung der Brühkammer an den angetriebenen T-Kolben stellt einen mechanisch einfacheren Antrieb dar, als eine Kulissensteuerung, wie sie der Stand der Technik für den T-Kolben erfordert.
Der Kupplung zwischen T-Kolben und Brühkammer kann ein Aktuator zur Betätigung eines Ver- bzw. Entriegelungsmittel zum Ver- bzw. Entkuppeln zugeordnet sein. Die Kupplung kann berührungslos, z. B. mittels Magnetkraft erzeugt werden. Hierzu kann dem T-Kolben und/oder der Brühkammer ein Elektromagnet zugeordnet sein, der mit einem Abschnitt magnetischen Materials, einem Dauermagneten oder auch einem Elektromagneten des anderen Bauteils zusammenwirkt, wenn der wenigstens eine Elektromagnet mit elektrischem Strom beaufschlagt wird. Hierzu ist eine entsprechende Steuerschaltung erforderlich, die über elektrische Leitungen mit dem wenigstens einen Elektromagneten verbunden ist. Ein derartiger Elektromagnet kann auch als Aktuator zur Betätigung einer Entriegelungsbaugruppe dienen, um die Kupplung durch gezieltes Ansteuern betätigen zu können. Nach einer vorteilhaften Ausgestaltung der Erfindung kann die Kupplung über Kupplungsmittel verfügen, die lediglich durch Aufbringen einer Mindestkraft entriegelbar sind. Die Kraftrichtung der Mindestkraft verläuft dazu vorzugsweise in der Verlagerungsrichtung des T-Kolbens. Die Mindestkraft kann dann lediglich durch die Verlagerung der T-Kolbens bzw. der Brühkammer hervorgerufen werden, indem sie beispielsweise an feststehenden Anschlägen vorbeifährt. Die Kopplung erfordert also kein separates Entriegelungsmittel, sondern löst die Verbindung selbsttätig, sobald die Mindestkraft überschritten ist. Dies führt zu einem besonders einfachen Aufbau ohne zusätzliche Steuerleitungen oder mechanische Entriegelungseinrichtungen, wie z. B. separat angesteuerte Hebel.

Eine einfache Entriegelung ist dann möglich, wenn diese Mindestkraft zum Entriegeln kleiner als die maximal erforderliche Antriebskraft zum Verlagern der miteinander gekuppelten Brühkammer und des T-Kolbens ist. Die Mindestkraft kann folglich allein durch den Antrieb zum Verlagern der miteinander gekoppelten Brühkammer und des T-Kolbens aufgebracht werden, um die Kupplung zu lösen. Es ist also kein separater Aktuator dafür nötig.

Nach einer weiteren Ausgestaltung der Erfindung kann die Mindestkraft zwar kleiner als die Antriebskraft zum Verlagern der Brühkammer und des T-Kolbens, aber größer als die Kraft zum Anheben der gefüllten Brühkammer mit dem angekuppelten T-Kolben sein. So kann die üblicherweise mit Kaffeepulver gefüllte und an den T-Kolben angekuppelte Brühkammer entgegen der Schwerkraft von der Antriebskraft angehoben werden. Somit kann ein Entkuppeln durch Aufbringen der Mindestkraft dann erreicht werden, wenn z. B. die Brühkammer an einen Anschlag stößt und damit ihre weitere Bewegung blockiert ist, während der T-Kolben weiter mit der Antriebskraft beaufschlagt wird.

Als Kupplung können verschiedene, einen Form- oder Kraftschluss bereitstellende Kupplungselemente verwendet werden. Vorzugsweise umfasst die die Kupplung Rastmittel, die einen Formschluss bewirken Als Rastmittel können eine an einem Schaft des T-Kolbens zumindest teilweise umlaufende Nut und ein in die Nut eingreifendes erstes Ende eines federnd vorgespannten Stößels dienen. Die Nut kann dem T-Kolben zugeordnet sein, während der Stößel der Brühkammer zugeordnet ist, oder umgekehrt. Der Stößel kann mittels eines geeigneten federnden Elements, wie beispielsweise einer Spiralfeder oder eine federnden Zunge federnd vorgespannt sein. Bei einer geeignete Dimensionierung der Rastmittel, beispielsweise einer im Querschnitt halbrunden Nut, in die ein gerundeter Kopf des ersten Endes des Stößels eingreift, kann die Verrastung zwischen dem T-Kolben und der Brühkammer durch Aufbringen der Mindestkraft lösbar ausgebildet sein.

Durch Kuppeln der Brühkammer mit dem T-Kolben kann die Brühkammer verfahren werden. Soll sie nicht verfahren werden, kann sie beispielsweise durch die Wirkung der Schwerkraft in Ruhe gehalten werden. Nach einer weiteren vorteilhaften Ausgestaltung der Erfindung kann der Kaffeevollautomat über eine Kupplung mit einer ersten Kupplungseinheit zwischen dem T-Kolben und der Brühkammer und über eine zweite Kupplungseinheit zwischen der Brühkammer und einem ortsfesten Gehäuseabschnitt des Kaffeevollautomaten verfügen. Denn zuverlässiger als durch die Schwerkraft lässt sich die Brühkammer über separate Haltemittel, hier die zweite Kupplungseinheit, in einer erforderlichen Ruhestellung festhalten.

Regelmäßig geht ein Entkoppeln der Brühkammer vom Gehäuse mit einem Ankuppeln der Brühkammer mit dem T-Kolben einher. Die erste Kupplungseinheit kann damit eine Doppelfunktion aufweisen, indem sie ein Entkuppeln der Brühkammer von dem T-Kolben erlaubt, wenn die Rastmittel zum Kuppeln der Brühkammer mit einem ortsfesten Gehäuseabschnitt eingerastet sind, ohne das weitere Kupplungen oder Rastmittel erforderlich sind. In Verbindung mit einem Anschlag zum Entkuppeln der Brühkammer vom T-Kolben ist es somit möglich, an zwei bestimmten Positionen ein Entkoppeln der Brühkammer von dem T-Kolben zu bewirken.

Die Rastmittel zum Kuppeln der Brühkammer an einen ortsfesten Gehäuseabschnitt sind wenigstens an einer von zwei Endpositionen angeordnet, zwischen denen die Brühkammer verfahren werden kann. Eine obere Endposition ist durch den Brühkopf mit seinen Anschlägen zum Stoppen und zugleich Verschließen der Brühkammer definiert, während die untere Endposition der untersten Position der Brühkammer mit dem größten Abstand zum Brühkopf entspricht,. Dabei sind die Rastmittel zum Kuppeln der Brühkammer am ortsfesten Gehäuseabschnitt vorzugsweise der unteren Endposition zugeordnet, um ein Verfahren des T-Kolbens unabhängig von der Brühkammer in der untersten Position insbesondere zum Auswerfen des Tresters zu erlauben.

Auch die zweite Kupplungseinheit zum Ankuppeln der Brühkammer an einen ortsfesten Gehäuseabschnitt kann z. B. elektromagnetisch ansteuerbare Aktuatoren aufweisen, um die Brühkammer und den ortsfesten Gehäuseabschnitt miteinander zu kuppeln oder voneinander zu lösen. Vorzugsweise können die Rastmittel zum Kuppeln der Brühkammer mit einem ortsfesten Gehäuseabschnitt des Gehäuses des Kaffeevollautomaten durch Aufbringen einer Mindestentriegelkraft entriegelbar und durch Aufbringen einer Mindestrastkraft verrastbar sein. Dabei ist vorzugsweise vorgesehen, dass die Mindestrastkraft kleiner als die Mindestentriegelkraft ist. Somit ist eine kleinere Kraft zum Kuppeln erforderlich als zum Entriegeln der Kupplung der Brühkammer von dem ortsfesten Gehäuseabschnitt. Dadurch wird ein ungewolltes Lösen der Kupplung bei Betrieb vermieden. Weiterhin kann es vorteilhaft sein, wenn die Mindestrastkraft in einer anderen Richtung aufgebracht werden muss als die Mindestentriegelkraft. Somit ist durch bloße Richtungsumkehr eines Antriebs zum Verlagern der Brühkammer das Aufbringen der Mindestrastkraft oder der Mindestentriegelkraft möglich.

In einer bevorzugten Ausführungsform wird die Mindestrastkraft der ersten Kupplungseinheit, nämlich der Kupplung zwischen dem T-Kolben und der Brühkammer, durch Kraft- bzw. Reibschluss einer zwischen der Brühkammer und dem T-Kolben ohnehin angeordneten Dichtung und/oder durch ein erstes Ende des federnd vorgespannten Stößels übertragen. Dabei kann die Dichtung ein O-Ring sein. Dies führt zu einem besonders einfachen Aufbau, ohne dass zusätzliche, Kräfte übertragende Mittel vorgesehen sein müssen, um die Mindestentriegelkraft zu übertragen.

Vorzugsweise kann die Kupplung einen federnd vorgespannten Anschlag umfassen, der mit einem zweiten Ende des federnd vorgespannten Stößels zusammenwirkt, um die Brühkammer mit dem ortsfesten Gehäuseabschnitt zu koppeln. Der Anschlag kann in einem Sackloch angeordnet sein, dessen Tiefe größer als die Länge des Anschlags ist. In dem Sackloch kann eine Feder angeordnet sein, die den Anschlag federnd vorspannt, sodass er sich im unbelasteten Zustand mit seinem vorderen Ende aus dem Sackloch erstreckt und in dieser Position mit dem zweiten Ende des Stößels zusammenwirkt. Die Länge des Stößels wird dann so gewählt, dass sie größer als die Länge der Durchgangsbohrung ist und somit Endabschnitte des Stößels aus der Durchgangsbohrung herausragen, um entweder in die Nut am T-Kolben oder in Eingriff mit dem Anschlag zu treten. Somit weist der federnd vorgespannte Stößel mindestens eine Doppelfunktion auf, indem das erste Ende des federnd vorgespannten Stößels als Kupplung mit dem T-Kolben wirken kann und das zweite Ende des federnd vorgespannten Stößels dazu dient, die Brühkammer mit einem ortsfesten Gehäuseabschnitt zu kuppeln. Dadurch lässt sich die Zahl der Bauteile reduzieren und ein einfacher Aufbau der Brüheinheit erreichen.

Diese Doppelfunktion wird vorzugsweise dadurch erreicht, dass der federnd vorgespannte Stößel in zwei entgegengesetzte Richtungen verlagerbar gelagert ist und durch Eintreten in die Nut oder durch Inkontakttreten mit dem gefederten Anschlag aus einer Mittelposition bewegbar ist. Somit wird der federnd vorgespannte Stößel aus eine Mittel- bzw. Ruheposition in eine von zwei Endlagen bewegt. Eine der beiden Endlagen wird erreicht, wenn der Stößel in die Nut eingreift und so die Brühkammer an den T-Kolben kuppelt. Die zweite Endlage wird erreicht, wenn der Stößel nicht in die Nut eingreift und so die Brühkammer an einem ortsfesten Gehäuseabschnitt kuppelt.

Nach einer weiteren vorteilhaften Ausgestaltung der Erfindung kann der federnd vorgespannte Stößel einen Kraft- bzw. Reibschluss zwischen der Brühkammer und dem T-Kolben bewirken. Hierzu ist die Feder des federnd vorgespannten Stößels derart dimensioniert, dass sie den Stößel mit einer ausreichenden Kraft an die Mantelfläche des T-Kolbens drückt. Über die dadurch hervorgerufene Reibkraft kann der Stößel eine Positionsfixierung der Brühkammer gegenüber dem T-Kolben erreichen und damit eine dritte Kupplungseinheit darstellen. Der Kraft- bzw. Reibschluss kann verbessert werden, wenn z. B. für die Reibpartner - die Mantelfläche des T-Kolbens und den Stößel - eine entsprechende Materialpaarung gewählt wird und/oder die zusammenwirkenden Oberflächen die Reibung erhöhend verändert werden. Z. B. kann die Mantelfläche des T-Kolbens und/oder der Stößel wenigstens abschnittsweise zumindest eine erhöhte Reibung hervorrufen, indem beispielsweise die Mantelfläche des T-Kolbens zumindest abschnittsweise eine höhere Rauhigkeit aufweist. Alternativ kann ein gummierter Stößel auf eine besonders glatte Mantelfläche des T-Kolbens treffen. Schließlich kann die Mantelfläche des T-Kolbens alternativ oder zusätzlich mit einer beispielsweise ringförmig umlaufenden Wulst versehen sein, die einer weiteren, ungewünschten Verlagerung der Brühkammer in Bezug zum T-Kolben bei Auftreffen des federnd vorgespannten Stößels einen Widerstand entgegensetzt, durch Aufbringen einer zusätzlichen bzw. gesteigerten Kraft aber überwunden werden kann. Die Relativposition der Brühkammer in Bezug zum T-Kolben kann dabei variieren, weil der Stößel an nahezu der gesamten Längserstreckung des T-Kolbens zwischen dessen oberseitigen Kopfes und der umlaufenden Nut angreifen kann. Weil damit die Relativposition der Brühkammer und des T-Kolbens zueinander nicht festgelegt ist, ist kein separater Pulvermengenausgleich nach einem Befüllen der Brühkammer und vor dem Verpressen des Kaffeepulvers erforderlich.

Damit ist eine Fixierung der Brühkammer in Bezug zum T-Kolben in einer zweiten Position möglich neben der ersten Position, die durch die erste Kupplungseinheit definiert wird. D. h., der gefederte Stößel kann schließlich eine Dreifachfunktion aufweisen: Er dient zum Kuppeln der Brühkammer an den T-Koben in zwei unterschiedlichen Positionen, zum einen mittels Formschluss im Zusammenwirken mit der Nut und zum anderen mittels Reibschluss am Schaft des T-Kolbens, und zum Kuppeln der Brühkammer mittels Formschluss an eine ortsfesten Gehäuseabschnitt. Von Vorteil ist, wenn die Bildung des Reibschlusses zwischen der Brühkammer und dem T-Kolben unterstützt wird durch die Reibwirkung einer Dichtung, die zur Abdichtung zwischen der Brühkammer und dem T-Kolben an dessen Kopf umfangsseitig angeordnet ist.

Das Prinzip der Erfindung wird im Folgenden anhand einer Zeichnung beispielhaft noch näher erläutert. In der Zeichnung zeigen:
- Figur 1:: eine schematische Darstellung einer Brüheinheit eines Kaffeevollautomaten,
- Figur 2:: eine schematische Darstellung der Brüheinheit in einer Befüllposition,
- Figur 3:: die Brüheinheit mit geschlossener Brühkammer,
- Figur 4:: die Brüheinheit in einer Position zum Durchführen eines Brühvorgangs,
- Figur 5:: die Brüheinheit mit geöffneter Brühkammer,
- Figur 6:: die Brüheinheit mit einer am Gehäuse des Kaffeevollautomaten angekoppelten Brühkammer,
- Figur 7:: die Brühkammer in einer Position zum Entfernen des Kaffeetresters, und
- Figur 8:: die Brüheinheit 1 wieder in der Befüll- bzw. Grundstellung.

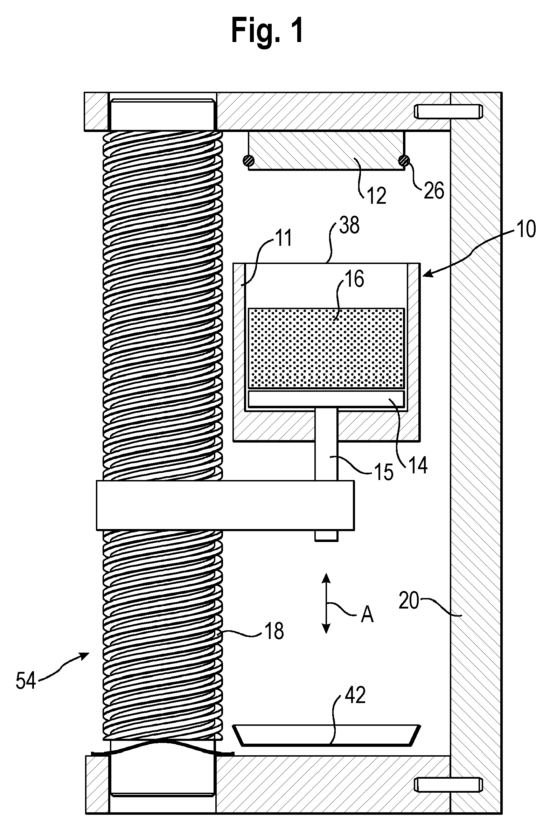

Figur 1 zeigt eine stark vereinfachte und schematisierte Ansicht einer Spindelbrüheinheit eines Kaffeevollautomaten. Sie umfasst eine in einem Gehäuse 20 des Kaffeevollautomaten angeordnete zylindrische Brühkammer 10 mit einer Wandung 11, in die von ihrer als Öffnung 38 ausgebildeten offenen Oberseite aus ein ebenfalls zylindrischer Brühkopf 12 hineinragen kann, der ortfest mit dem Gehäuseabschnitt 20 des Gehäuses des Kaffeevollautomaten verbunden ist. Ihm gegenüber liegt auf einer Bodenfläche der Brühkammer 10 ein zylindrischer T-Kolben 14, so dass zwischen ihm und dem Brühkopf 12 gemahlenes Kaffeepulver 16 verpresst werden kann. Dazu wird der T-Kolben 14 über seine Kolbenstange 15 angetrieben, so dass der T-Kolben 14 entlang einer Verlagerungsachse A in Richtung auf dem Brühkopf 12 zu und nach Abschluss des Verpressens in die Gegenrichtung verlagert werden kann. Der T-Kolben 14 ist hierzu über seine Kolbenstange 15 mit einer eine Spindel 18 aufweisenden Spindelantriebseinheit 54 verbunden. Der T-Kolben 14 übt bei durch den Brühkopf 12 geschlossener Öffnung 38 während des Verpressens des Kaffeepulvers 16 eine Verpresskraft aus. Unterhalb des T-Kolbens 14 befindet sich der Bereich der Tropfschale 42 des Kaffeevollautomaten. Der Brühkopf 12 trägt umfangsseitig einen ersten Dichtungsring 26, der ihn bei der Brühung gegenüber der Wandung 11 der Brühkammer 10 abgedichtet. Als Lippendichtring erfordert er eine geringere Betätigungskraft beim Öffnen der Brühkammer 10 als ein O-Ring.

Wie nachfolgend noch genauer erläutert wird ist die Brühkammer 10 mit dem T-Kolben 14 zeitweise bewegungsgekoppelt. So kann die Brühkammer 10 während verschiedener Abschnitte des Zubereitungsvorgangs eines Kaffeegetränks innerhalb des Gehäuses 20 ebenfalls vertikal verschoben werden. In der in Figur 1 dargestellten Position ist die Brühkammer 10 geöffnet, so dass durch die Öffnung 38 die Brühkammer 10 mit gemahlenem Kaffeepulver 16 befüllt werden kann. Die Brühkammer 10 und der T-Kolben 14 befinden sich noch in einer unteren Position, aus der heraus sie mittels der Spindel 18 gegen den Brühkopf 12 verfahren werden können, um das Kaffeepulver 16 zu verpressen. Nach einer Infusion von Brühwasser und der Ableitung des so gewonnenen Kaffeegetränks wird die Brühkammer 10 in eine abgesenkte Position gebracht, in der die Brühkammer 10 von inzwischen verbrauchtem Kaffeetrester befreit und mit frisch gemahlenem Kaffeepulver 16 befüllt werden kann.

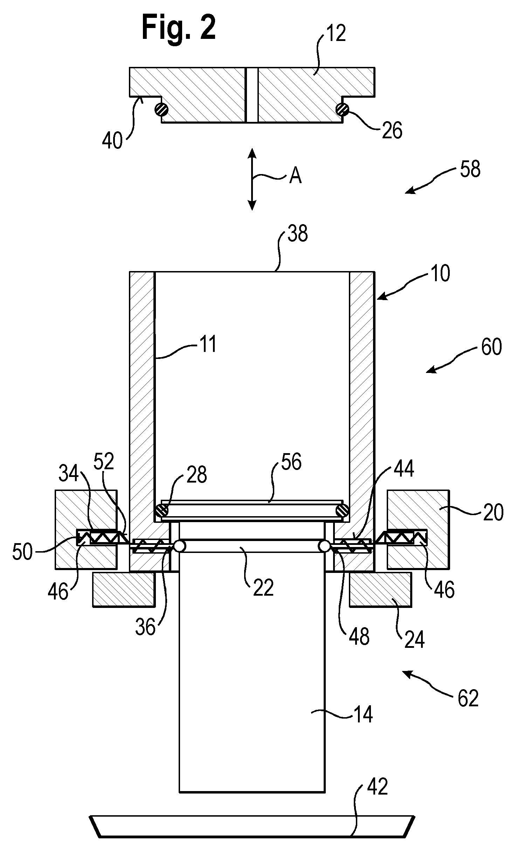

Es wird nun zusätzlich auf Figur 2 Bezug genommen, in der der Aufbau insbesondere des T-Kolbens 14 und der Brühkammer 10 detailliert erläutert wird: Von der Brüheinheit sind lediglich die Brühkammer 10, der Brühkopf 12 und der T-Kolben 14 wiedergegeben. Der T-Kolben 14 ist mit einem oberen, verbreiterten Kopf 56 versehen, an dem ein zweiter O-förmiger Dichtungsring 28 zur Abdichtung des T-Kolbens 14 an der Wandung 11 der Brühkammer 10 befestigt ist. Der T-Kolben 14 kann relativ zur Brühkammer 10 entlang einer Verlagerungsachse A durch die Spindelantriebseinheit 54 verschoben werden. Die Brühkammer 10 kann durch die obere Öffnung 38 hindurch mit gemahlenem Kaffee 16 befüllt werden. Die Öffnung 38 kann mittels des Brühkopfs 12 verschlossen werden. Der Brühkopf 12 weist einen Anschlag 40 auf, der mit in Bewegungsrichtung vorne befindlichen Abschnitten der Brühkammer 10 in Kontakt tritt, wenn die Öffnung 38 der Brühkammer 10 mit dem Brühkopf 12 verschlossen ist.

Ferner weist die Brüheinheit Rastmittel als Kupplung 58 auf, um die Brühkammer 10 an dem T-Kolben 14 zu verrasten. Die Rastmittel bilden eine erste Kupplungseinheit 60 und umfassen eine Nut 22 und einen gefederten Stößel 36. Die Nut 22 ist in die Mantelfläche des zylindrischen T-Kolbens 14 eingebracht, während der gefederte Stößel 36 in einer Durchgangsbohrung 44 der Brühkammer 10 angeordnet ist. Dabei ist die Länge des Stößels 36 so gewählt, dass sie größer als die Länge der Durchgangsbohrung 44 ist und somit Endabschnitte des Stößels 36 aus der Durchgangsbohrung 44 herausragen, um in Eingriff mit anderen Bestandteilen der Brüheinheit zu treten, die später erläutert werden. Der gefederte Stößel 36 ist mittels einer Spiralfeder 48 federnd vorgespannt, die innerhalb der Durchgangsbohrung 44 angeordnet ist. Die Rastmittel umfassen ferner einen gefederten Anschlag 34, der in einem Sackloch 46 angeordnet ist, das in einem Gehäuseabschnitt 20 des Gehäuses der Brüheinheit eingebracht wurde. Dabei ist die Tiefe des Sacklochs 46 länger als die Länge des gefederten Anschlags 34 gewählt. Der gefederte Anschlag 34 ist ebenfalls mittels einer Spiralfeder 50 federnd vorgespannt und erstreckt sich im entspannten zustand der Feder 50 mit seinem vorderen Ende aus dem Sackloch 46. Er weist eine Anlaufschräge 52 auf, die ein Verdrängen des gefederten Anschlags 34 in das Sackloch 46 hinein durch eine Abwärtsbewegung der Brühkammer 10 in Schwerkraftrichtung entlang der Verlagerungsachse A erleichtert.

Der gefederte Anschlag 34 wirkt andererseits zusammen mit dem gefederten Stößel 36, um die Brühkammer 10 mit dem Gehäuseabschnitt 20 zu verrasten. Sie bilden eine zweite Kupplungseinheit 62. Hierzu weist der gefederte Stößel 36 neben einem ersten Ende, das in die Nut 22 des T-Kolbens 14 eingreift, ein zweites Ende auf, das aus der Durchgangsbohrung 44 heraustreten kann und somit eine Kopplung der Brühkammer 10 mit dem Gehäuseabschnitt 20 bewirkt.

Schließlich ist noch ein gehäusefester Anschlag 24 vorgesehen, der eine Bewegung der Brühkammer 10 in Schwerkraftrichtung entlang der Verlagerungsachse A nach unten begrenzt.

Im Folgenden wird unter Bezugnahme auf die Figuren 2 bis 8 der Betriebsablauf bei einem Brühvorgang zur Herstellung eines Kaffeegetränks erläutert.

In Figur 2 ist eine Befüllstellung gezeigt, in der sich die Brühkammer 10 und der T-Kolben 14 in ihrer am weitesten abgesenkten Position befinden. Somit ist eine ausreichende Füllhöhe zwischen der Öffnung 38 und dem Brühkopf 12 gegeben, um die Brühkammer 10 mit gemahlenem Kaffeepulver 16 zu befüllen. In dieser Position erstreckt sich der T-Kolben 14 bis in den Bereich der Tropfschale 42 hinein. In dieser Position ist die Brühkammer 10 am T-Kolben 14 eingerastet, d. h. der gefederte Stößel 36 greift in die Nut 42 des T-Kolbens 14 ein und bilden so eine Rastverbindung.

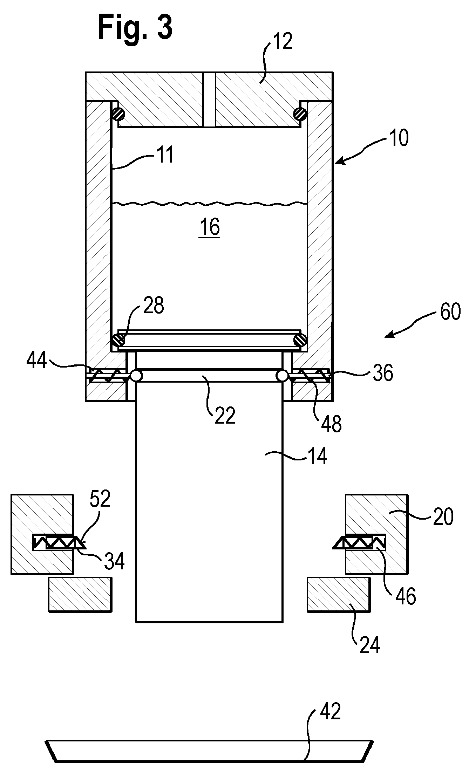

Im nächsten Schritt wird durch einen Antrieb (nicht dargestellt) der T-Kolben 14 entlang der Verlagerungsachse A nach oben in Richtung auf den Brühkopf 12 hin bewegt. Aufgrund der Rastverbindung zwischen dem T-Kolben 14 und der Brühkammer 10 wird zugleich die mit Kaffeepulver 16 gefüllte Brühkammer 10 nach oben bewegt. Die Bewegung der Brühkammer 10 endet, wenn sie auf die Anschläge 40 des Brühkopfs 12 trifft. Diesen Zustand zeigt Figur 3. Dabei wird die Dichtung 26 zwischen dem Brühkopf 12 und der Wandung 11 der Brühkammer 10 aktiviert und somit die Brühkammer 10 druckdicht verschlossen.

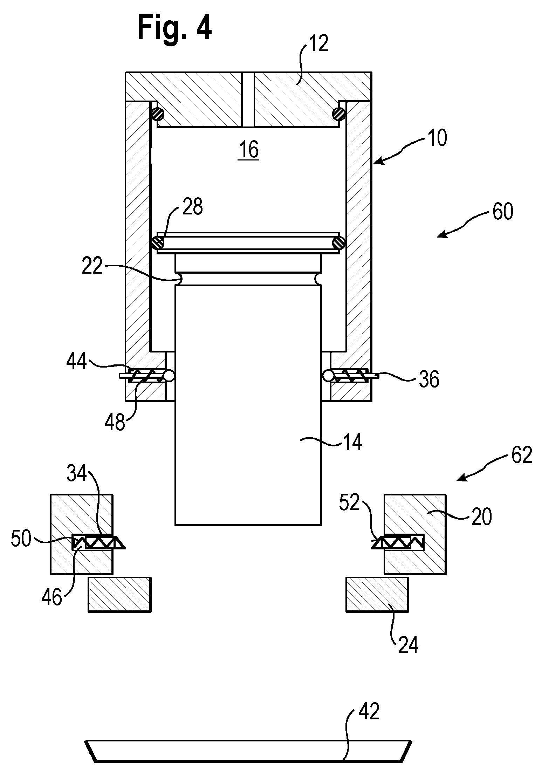

In einem nächsten Schritt (siehe Figur 4) wird der T-Kolben 14 weiter entlang der Verlagerungsachse A auf den Brühkopf 12 zu bewegt und dadurch das Kaffeepulver 16 verpresst. Die Rastverbindung zwischen dem Brühkopf 12 und dem T-Kolben 14 wird gelöst, da nun eine weitere Bewegung der Brühkammer 10 in Richtung des Brühkopfes 12 durch die Anschläge 40 blockiert ist. Somit wirkt die Antriebskraft auf die Rastverbindung zwischen der Brühkammer 10 und dem T-Kolben 14. Als Folge tritt der gefederte Stößel 36 aus der Nut 22 aus. Um dies zu erleichtern, sind die Nut 22 und das vordere Ende des gefederten Stößels 36 ebenfalls abgerundet ausgebildet, so dass durch Aufbringen einer Mindestantriebskraft ein Entrasten der Rastverbindung zwischen dem T-Kolben 14 und der Brühkammer 10 erreicht werden kann. Somit reicht die Kraft des den T-Kolben 14 antreibenden Antriebs aus, zum einen die mit gemahlenem Kaffee 16 gefüllte Brühkammer 10 anzuheben und nach Blockade einer weiteren Bewegung der Brühkammer 10 durch Inkontakttreten mit dem Anschlag 40 die Rastverbindung zwischen dem Brühkopf 12 und dem T-Kolben 14 durch Aufbringen einer entsprechenden Mindestkraft zu lösen. Eine weitere Folge des Lösens der Rastverbindung zwischen der Brühkammer 10 und dem Stößel 14 ist, dass der gefederte Stößel 36 aus seiner ersten Endlage bewegt wird und sein zweites Ende aus der Durchgangsbohrung 44 heraustritt. Das erste Ende des gefederten Stößels 36 greift also nicht mehr in die Nut 22 ein.

Kniehebelantriebe erforderten eine separate Pulvermengenkompensation, z. B. wenn Kaffeegetränke zubereitet werden sollen, die unterschiedlich große Mengen an gemahlenen Kaffee erfordern. Bei einem Spindelantrieb wie dem vorliegenden dagegen kann sie entfallen. Denn der T-Kolben 14 kann entlang der Verlagerungsachse A weiter in Richtung auf den Brühkopf 12 hin verfahren werden, bis das Kaffeepulver 16 für das gewünschte Kaffeegetränk unabhängig von der Kaffeepulvermenge ausreichend verpresst ist. In der in Figur 4 dargestellten Position erfolgt nun eine Infusion von Brühwasser, um ein Kaffeegetränk zu zubereiten.

In einem folgenden Schritt wird der T-Kolben 14 wieder abgesenkt. Um die Brühkammer 10 zu öffnen, muss der allein direkt angetriebene T-Kolben 14 mit der Brühkammer 10 gekoppelt sein, um die Öffnung 38 wieder freizugeben. Dabei ist die Brühkammer 10 an den T-Kolben mittels einer dritten Kuppelungseinheit angekuppelt. Die zum Koppeln der Brühkammer 10 mit dem T-Kolben 14 erforderliche Mindestrastkraft wird dabei durch die Reibkraft des Dichtelements 28 an der Wandung 11 der Brühkammer 10 einerseits und durch den Anpressdruck der Stößel 36 am T-Kolben 14 andererseits übertragen. Das Dichtelement 28 und der federvorgespannte Stößel 36 rufen am T-Kolben 14 eine Reibkraft hervor, die größer ist als die Reibkraft, die zwischen der anderen Dichtung 26 und der Brühkammer 10 wirkt. So kann durch die doppelte Reibschlusswirkung des Dichtelements 28 einerseits und des Stößels 36 andererseits die Brühkammer 10 vom Brühkopf 12 gelöst werden. Die Koppelung zwischen dem T-Kolben 14 und der Brühkammer 10 allein auf der Basis von Reibschluss kann als eine dritte Kupplungseinheit verstanden werden.

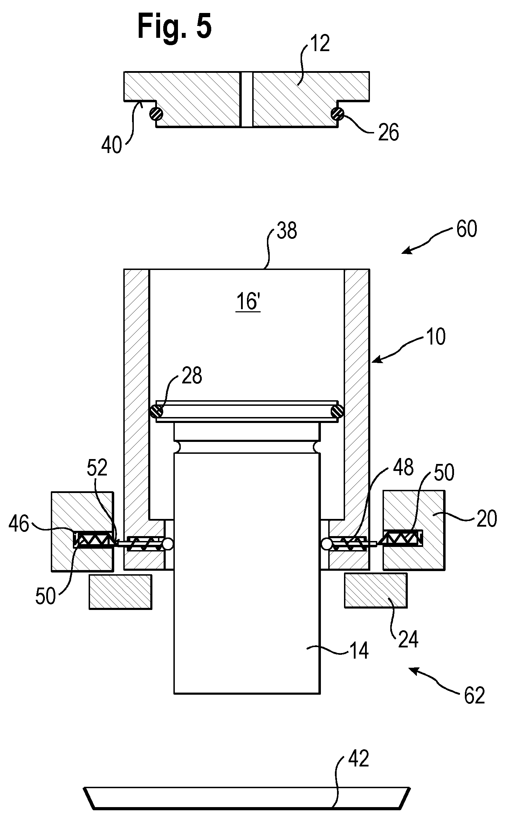

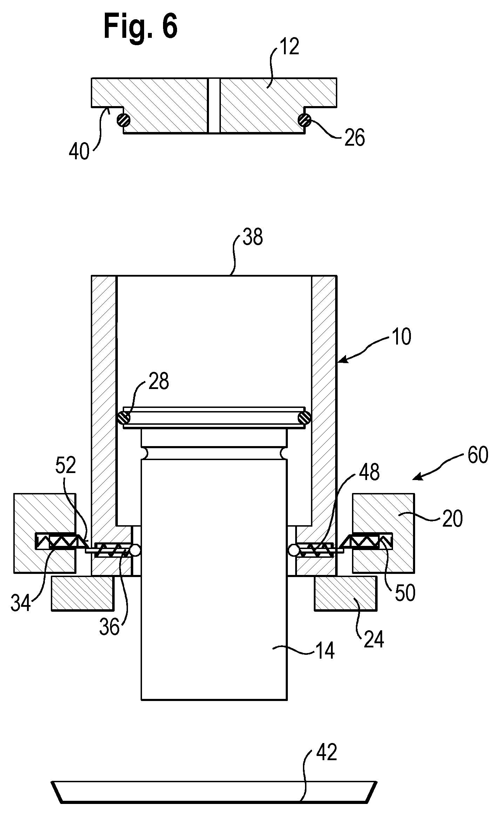

Durch die Abwärtsbewegung des T-Kolbens 14 samt gekoppelter Brühkammer 10 erreicht der gefederte Stößel 36 der Brühkammer 10 eine Position (siehe Figur 5), in der er in Kontakt mit den gefederten Anschlägen 34 tritt. In dieser Position trifft das zweite Ende des gefederten Stößels 36 auf die Anlaufschräge 52 des gefederten Anschlags 34 und drückt ihn in das Sackloch 46, so dass durch eine weitere Abwärtsbewegung der Brühkammer 10 mit dem T-Kolben 14 die in Figur 6 dargestellte Position erreicht wird. Die Brühkammer 10 trifft auf den Anschlag 24 auf, der eine weitere Abwärtsbewegung der Brühkammer 10 stoppt. In dieser Position gibt der Stößel 36 den Anschlag 34 frei. Der gefederte Anschlag 34 springt wieder zurück bzw. aus dem Sackloch 46 heraus, so dass nun ein Eingriff gegeben ist zwischen dem gefederten Anschlag 34 und dem gefederten Stößel 36 bzw. mit dessen zweiten Ende. Er verhindert, dass die Brühkammer 10 aufwärts bewegt wird, wenn der T-Kolben 14 wieder aufwärts in Richtung zu dem Brühkopf 12 hin fährt. Somit ist der Brühkopf 10 am Gehäuseabschnitt 20 durch Aufbringen einer Mindestrastkraft verrastbar (vgl. Figur 6).

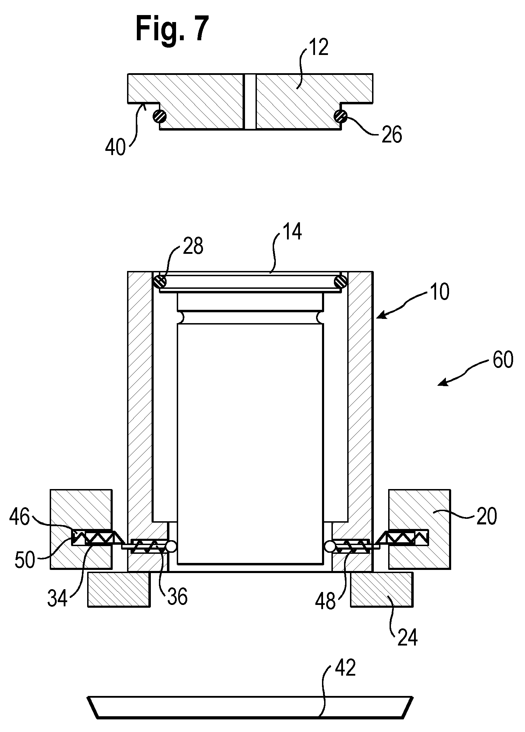

Durch weiteres Aufwärtsfahren des T-Kolbens 14 erreicht dessen Kopf 56 eine Position, in der er mit der Öffnung 38 der Brühkammer 10 nahezu abschließt. Somit hat der Kopf 56 den Kaffeetrester aus dem Inneren der Brühkammer 10 bewegt (siehe Figur 7). In dieser Position entfernt ein Auswurfelement (nicht dargestellt) der Kaffeetrester.

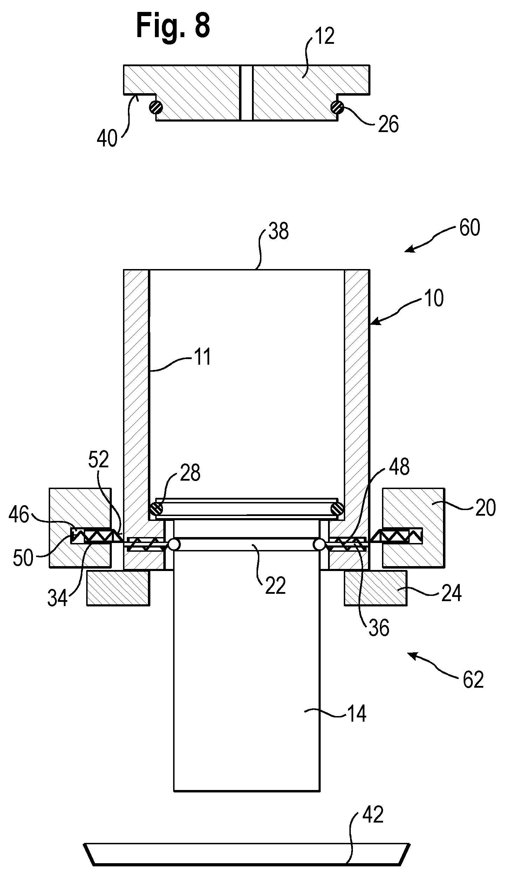

Anschließend wird der T-Kolben 14 wieder entlang der Verlagerungsachse A von dem Brühkopf 12 weg abwärts bewegt, während der Brühkopf 10 unbewegt bleibt, da er immer noch an den Anschlägen 24 ansteht, die seine Bewegung blockieren. Am Ende dieses Vorgangs (siehe Figur 8) hat der Kopf 56 des T-Kolbens 14 die untere Position erreicht, in der er wieder den kompletten Innenraum der Brühkammer 10 freigibt, und ein erneutes Befüllen der Brühkammer 10 durch die Öffnung 38 möglich ist. Die Brühkammer 10 und der T-Kolben 14 befinden sich wieder in ihrer abgesenkten Grundstellung gemäß Figur 1.

In der Grundstellung schnappt wieder das erste Ende des gefederten Stößels 36 in die Nut 22 des T-Kolbens 14 ein, so dass durch die Federwirkung des gefederten Stößels 36 das zweite Ende nicht aus der Durchgangsöffnung 44 hervorsteht. Somit ist kein Eingriff mehr zwischen dem zweiten Ende des gefederten Stößels 36 und dem gefederten Anschlag 34 gegeben, so dass die Rastverbindung zwischen der Brühkammer 10 und dem Gehäuseabschnitt 20 aufgehoben ist. Jedoch taucht das erste Ende des gefederten Stößels 36 wieder in die Nut 22 ein, so dass die Brühkammer 10 wieder an dem T-Kolben 14 angekoppelt ist.

Die Brühkammer 10 kann in Richtung der Verlagerungsachse A eine Länge von etwa 40 mm aufweisen. Ein weiterer Abschnitt ist für die Lagerung des T-Kolbens 14 und der Kolbenstange 15 vorgesehen, woraus sich eine außenseitige Gesamtlänge der Brühkammer 10 von etwa 60 mm ergibt. Entsprechend muss der T-Kolben 14 eine Länge von ebenfalls 60 mm aufweisen. Zum Befüllen der Brühkammer 10 durch die Öffnung 38 ist eine Einwurfhöhe von ebenfalls 60 mm nötig, während der Brühkopf 12 eine Länge von 20 mm in Richtung der Verlagerungsachse A hat. Hieraus ergibt sich eine Gesamthöhe der Brüheinheit von 180 mm, wobei der T-Kolben 14 in der Einfüllposition 40 mm nach unten über die Brühkammer 10 hinaus in den Bereich der Tropfschale 42 steht, also 40 (Brühkammer) + 60 (T-Kolben) + 60 (Einfüllhöhe) + 20 (Brühkopf) mm = 180 mm. Hieraus ergibt sich inklusive der Lagerung eine Spindellänge von etwa 180 mm.

Da es sich bei dem vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Kaffeevollautomaten in anderer Form als in der hier beschriebenen folgen. Ebenso kann der Kaffeevollautomat in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10: Brühkammer
- 11: Wandung
- 12: Brühkopf
- 14: T-Kolben
- 15: T-Kolbenstange
- 16: gemahlener Kaffee
- 16': Kaffeetrester
- 18: Spindel
- 20: Gehäuseabschnitt
- 22: Nut
- 24: Anschlag
- 26: Dichtung
- 28: Dichtung
- 34: gefederter Anschlag
- 36: gefederter Stößel
- 38: Öffnung
- 40: Anschlag
- 42: Tropfschale
- 44: Durchgangsbohrung
- 46: Sackloch
- 48: Spiralfeder
- 50: Spiralfeder
- 52: Anlaufschräge
- 54: Spindelantriebseinheit
- 56: Kopf
- 58: Kupplung
- 60: erste Kupplungseinheit
- 62: zweite Kupplungseinheit
- A: Verlagerungsachse

## Patentansprüche

1. Kaffeevollautomat, insbesondere für Haushaltszwecke, zur Zubereitung einer Mehrzahl unterschiedlicher Kaffeegetränke, mit einer verlagerbaren Brühkammer (10), die eine Öffnung (38) zum Befüllen mit gemahlenem Kaffee (16) aufweist, einem Brühkopf (12) zum Verschließen der Öffnung (38) der Brühkammer (10), einem verlagerbaren T-Kolben (14) zum Verpressen von dem gemahlenen Kaffee (16) in der mit dem Brühkopf (12) verschlossenen Brühkammer (10), und einer Kupplung (58) zum Ankoppeln der Brühkammer (10) an den T-Kolben (14) zum gekoppelten Verlagern der an den T-Kolben (14) angekoppelten Brühkammer (10), **gekennzeichnet durch** einen mit dem T-Kolben (14) verbundenen Antrieb (54, 18, 15).

2. Kaffeevollautomat nach Anspruch 1, **dadurch gekennzeichnet, dass** die Kupplung (58) durch Aufbringen einer Mindestkraft entriegelbar sind.

3. Kaffeevollautomat nach Anspruch 2, **dadurch gekennzeichnet, dass** die Mindestkraft kleiner als die Antriebskraft zum Verlagern der miteinander gekoppelten Brühkammer (10) und des T-Kolbens (14) ist.

4. Kaffeevollautomat nach einem der Ansprüche 1 bis 3, **dadurch gekennzeichnet, dass** die Kupplung eine Nut (22) und ein in die Nut (22) eingreifendes erstes Ende eines federnd vorgespannten Stößels (36) umfassen.

5. Kaffeevollautomat nach einem der Ansprüche 1 bis 4, **dadurch gekennzeichnet, dass** die Kupplung (58) eine erste Kupplungseinheit (60) zum Koppeln der Brühkammer (10) mit dem T-Kolben (14) und eine zweite Kupplungseinheit (62) zum Koppeln der Brühkammer (10) mit einem ortsfesten Gehäuseabschnitt (20) des Kaffeevollautomaten aufweist.

6. Kaffeevollautomat nach Anspruch 5, **dadurch gekennzeichnet, dass** die Kupplung (58) durch Aufbringen einer Mindestentriegelkraft entriegelbar und durch Aufbringen einer Mindestrastkraft verrastbar sind.

7. Kaffeevollautomat nach Anspruch 6, **dadurch gekennzeichnet, dass** die Mindestrastkraft kleiner als die Mindestentriegelkraft ist.

8. Kaffeevollautomat nach Anspruch 7, **dadurch gekennzeichnet, dass** die Mindestriegelkraft durch Reibschluss einer zwischen der Brühkammer (10) und dem T-Kolben (14) angeordneten Dichtung (28) und/oder durch ein erstes Ende des federnd vorgespannten Stößel (36) übertragbar ist.

9. Kaffeevollautomat nach einem der Ansprüche 5 bis 8, **dadurch gekennzeichnet, dass** die zweite Kupplungseinheit (62) einen federnd vorgespannten Anschlag (34) umfasst, der mit einem zweiten Ende des federnd vorgespannten Stößels (36) zusammenwirkt.

10. Kaffeevollautomat nach Anspruch 9, **dadurch gekennzeichnet, dass** der Stößel (36) federnd vorgespannt in zwei entgegengesetzte Richtungen verlagerbar gelagert ist und durch Eintreten in die Nut (22) oder durch Inkontakttreten mit dem gefederten Anschlag (34) bewegbar ist.

## Claims

1. Automatic coffee machine, in particular for household purposes, for preparing a plurality of different coffee beverages, having a displaceable brewing chamber (10) which has an opening (38) for filling with ground coffee (16), a brewing head (12) for closing the opening (38) of the brewing chamber (10), and a displaceable T-piston (14) for pressing the ground coffee (16) in the brewing chamber (10) closed with the brewing head (12), and a coupling (58) for coupling the brewing chamber (10) to the T-piston (14) for the coupled displacement of the brewing chamber (10) coupled to the T-piston (14), **characterised by** a drive (54, 18, 15) connected to the T-piston (14).

2. Automatic coffee machine according to claim 1, **characterised in that** the coupling (58) can be unlocked by applying a minimum force.

3. Automatic coffee machine according to claim 2, **characterised in that** the minimum force is smaller than the driving force for displacing the coupled-together brewing chamber (10) and T-piston (14).

4. Automatic coffee machine according to one of claims 1 to 3, **characterized in that** the coupling comprises a groove (22) and a first end, which engages in the groove (22), of a spring-biased plunger (36).

5. Automatic coffee machine according to one of claims 1 to 4, **characterised in that** the coupling (58) has a first coupling unit (60) for coupling the brewing chamber (10) to the T-piston (14) and a second coupling unit (62) for coupling the brewing chamber (10) to a stationary housing section (20) of the automatic coffee machine.

6. Automatic coffee machine according to claim 5, **characterised in that** the coupling (58) can be unlocked by applying a minimum unlocking force and can be latched by applying a minimum latching force.

7. Automatic coffee machine according to claim 6, **characterised in that** the minimum latching force is smaller than the minimum unlocking force.

8. Automatic coffee machine according to claim 7, **characterised in that** the minimum locking force can be transmitted by friction locking of a seal (28) arranged between the brewing chamber (10) and the T-piston (14) and/or by a first end of the spring-biased plunger (36).

9. Automatic coffee machine according to one of claims 5 to 8, **characterised in that** the second coupling unit (62) comprises a spring-biased stop (34) which interacts with a second end of the spring-biased plunger (36).

10. Automatic coffee machine according to claim 9, **characterised in that** the plunger (36) is mounted so as to be displaceable in a spring-biased manner in two opposite directions and can be moved by entry into the groove (22) or by coming into contact with the sprung stop (34).

## Revendications

1. Machine à café entièrement automatique, notamment à usage domestique, destinée à la préparation d'une pluralité de boissons différentes à base de café, comprenant une chambre de percolation déplaçable (10), qui présente une ouverture (38) pour le remplissage avec du café moulu (16), une tête de percolation (12) destinée à fermer l'ouverture (38) de la chambre de percolation (10), un piston en T déplaçable (14) destiné à comprimer le café moulu (16) dans la chambre de percolation (10) fermée par la tête de percolation (12), et un accouplement (58) destiné à accoupler la chambre de percolation (10) au piston en T (14) pour le déplacement accouplé de la chambre de percolation (10) accouplée au piston en T (14),
**caractérisée par**
un entraînement (54, 18, 15) relié au piston en T (14).

2. Machine à café entièrement automatique selon la revendication 1, **caractérisée en ce que** l'accouplement (58) est déverrouillable par application d'une force minimale.

3. Machine à café entièrement automatique selon la revendication 2, **caractérisée en ce que** la force minimale est plus petite que la force d'entraînement destinée à déplacer la chambre de percolation (10) et le piston en T (14) accouplés l'un à l'autre.

4. Machine à café entièrement automatique selon l'une quelconque des revendications 1 à 3, **caractérisée en ce que** l'accouplement comprend une rainure (22) et une première extrémité, ayant prise dans la rainure (22), d'un coulisseau (36) précontraint de manière élastique.

5. Machine à café entièrement automatique selon l'une quelconque des revendications 1 à 4, **caractérisée en ce que** l'accouplement (58) présente une première unité d'accouplement (60) destinée à accoupler la chambre de percolation (10) au piston en T (14) et une deuxième unité d'accouplement (62) destinée à accoupler la chambre de percolation (10) à une section de boîtier stationnaire (20) de la machine à café entièrement automatique.

6. Machine à café entièrement automatique selon la revendication 5, **caractérisée en ce que** l'accouplement (58) est déverrouillable par application d'une force de déverrouillage minimale et **en ce qu'**il est enclenchable par application d'une force d'enclenchement minimale.

7. Machine à café entièrement automatique selon la revendication 6, **caractérisée en ce que** la force d'enclenchement minimale est plus petite que la force de déverrouillage minimale.

8. Machine à café entièrement automatique selon la revendication 7, **caractérisée en ce que** la force de verrouillage minimale est transmissible par frottement d'un joint (28) disposé entre la chambre de percolation (10) et le piston en T (14) et/ou au moyen d'une première extrémité du coulisseau (36) précontraint de manière élastique.

9. Machine à café entièrement automatique selon l'une quelconque des revendications 5 à 8, **caractérisée en ce que** la deuxième unité d'accouplement (62) comprend une butée (34) précontrainte de manière élastique, laquelle coopère avec une deuxième extrémité du coulisseau (36) précontraint de manière élastique.

10. Machine à café entièrement automatique selon la revendication 9, **caractérisée en ce que** le coulisseau (36) est logé de manière déplaçable dans deux directions opposées en étant précontraint de manière élastique et **en ce qu'**il est déplaçable en entrant dans la rainure (22) ou en entrant en contact avec la butée élastique (34).
